# EUROPÄISCHE PATENTSCHRIFT

(11) **EP 0 891 707 B1**
(45) Veröffentlichungstag und Bekanntmachung des Hinweises auf die Patenterteilung: **13.02.2002**
(21) Anmeldenummer: 97112390.6
(22) Anmeldetag: 18.07.1997
(51) Int. Cl.: A01N 3/00, A01N 25/34, A01N 65/00, C08L 91/06

(54) **Wachs/Pflanzenöl-Emulsionen**
Wax/vegetable oil emulsions
Emulsions de cire et d'huile végétale

(43) Veröffentlichungstag der Anmeldung: 20.01.1999
(73) Patentinhaber: Chemtec Leuna Gesellschaft für Chemie und Technologie mbH, 06236 Leuna (DE)
(72) Erfinder: Klimek, Irene, Dipl.-Chem., 06122 Halle (DE); Becker, Karl, Dr., 06237 Leuna (DE)
(74) Vertreter: Schinke, Herbert, Dr. Dr., Patentanwaltskanzlei

(56) Entgegenhaltungen:
- DD-A- 214 518
- DE-A- 4 427 879
- US-A- 3 388 992
- DATABASE WPI Section Ch, Week 7701 Derwent Publications Ltd., London, GB; Class A26, AN 77-01322Y XP002050909 & JP 51 045 656 B (YAMAGISHI Y) , 3.Dezember 1976
- DATABASE WPI Section Ch, Week 8750 Derwent Publications Ltd., London, GB; Class A97, AN 87-352925 XP002050910 & JP 62 257 320 A (NIPPON GREENER KK) , 9.November 1987

## Beschreibung

Die Erfindung betrifft neue Wachs/Pflanzenöl-Emulsionen und Verfahren zu ihrer Herstellung. Sie werden zur Formulierung von Pflanzenschutzpräparaten eingesetzt oder als Additiv den Pflanzenschutzformulierungen zudosiert und dienen zur Verbesserung der Haftung und zur Verlängerung der Wirkungsdauer sowie als Pflanzenstärkungsmittel, vorzugsweise als Anwachshilfe und Verdunstungsschutz, für agrar- und forstwirtschaftliche Produkte.

Pflanzenschutzmittel gelangen in zubereiteter Form in den Handel, d. h. sie enthalten neben dem Wirkstoff Zusätze, die auf die jeweilige Anwendung abgestimmte Ausbringung, Verteilung und Entfaltung des Wirkstoffs ermöglichen, sogen. Formulierungen. Formulierungen sind in der Regel Wirkstoff enthaltende verdünnte Lösungen, Emulsions- oder Dispersionskonzentrate oder in fester Form als verschnittene Stäubepulver oder Granulate.

Zur Verminderung von Umweltschäden besteht u.a. die Forderung, die Aufwandmengen an umweltbelastenden Wirkstoff zu reduzieren. Hierbei wurden 2 Wege beschritten:
1 Entwicklung neuer hochwirksamerer Stoffe und/oder
2 Reduzierung der Aufwandmenge durch Erhöhung des Wirkungsgrades.

Für den 2. Weg sind sogenannte Formulierhilfen oder Additive entwickelt worden, die insbesondere eine bessere Benetzung der Pflanzen und somit eine größere Kontaktoberflache schaffen. Dabei handelt es sich um Öle pflanzlicher oder mineralischer Herkunft, die mit Tensiden vermischt sind (Pflanzenarzt 48, No 7-8. 16-19. 1995 Brighton Crop Prot Conf-Weeds (3 1341-46. 1993)

Weiterhin sind Wachsemulsionen vom Typ Öl-in-Wasser bekannt, die Pflanzenschutzmittel, insbesondere Fungizide, enthalten, z. B. GB 1 226 790. Als Mittel zum Präparieren insbesondere von Blumenzwiebeln zur Verminderung des Schrumpfens sind in der DD 277 004 wäßrige EVA-Wachs-Emulsionen mit einem Feststoffgehalt von 15 bis 30 % beschrieben, die entweder pur zur Anwendung kommen oder mit handelsüblichen Bioziden kombiniert werden. DE 44 27 879 offenbart biologisch abbaubare Wachskompositionen, enthaltend 90 bis 70 Gewichtsanteile funktionalisierter Synthesewachse und/oder paraffinischer Kohlenwasserstoffe mit mittleren Molmassen von 500 bis 5000, Carboxylgruppen von 5 bis 50 mMol/Mol CH₂, Hydroxylgruppen von 5 bis 50 mMol/Mol CH₂, und 10 bis 30 Gewichtsanteile Pflanzenöle und/oder daraus gewinnbarer Fettsäuren oder Fettalkohole. Auch offenbart werden Emulsionen enthaltend der Wachskompositionen, entsalztes Wasser, und ein Anverseifungsmittels wie Triethanolamin.

Solche tensidhaltigen Öle vergrößern zwar die Kontaktoberfläche, haften jedoch ungenügend bei feuchter Witterung und besitzen kaum einen Rückhalteeffekt (Retardwirkung).

Filme aus herkömmlichen Wachsemulsionen sind nicht atmungsaktiv genug, der Retardeffekt läßt sich nicht variabel einstellen, und sie sind nicht biologisch abbaubar, so daß sich diese Wachsemulsionen als Formulierhilfe nicht bewährt haben.

Ziel der Erfindung ist daher die Entwicklung einer Emulsion, die mit vielen Pflanzenschutzmitteln bzw. marktüblichen Formulierungen gut verträglich ist und die geeignet ist, einen gut haftenden Wachsfilm auf der Pflanze auch bei feuchten Witterungsbedingungen zu hinterlassen, aus dem eingebettete oder anhaftende Wirkstoffe mit Retardeffekt freigegeben werden. Gleichzeitig soll der Film keinerlei pflanzenschädigende Wirkung aufweisen und soll in einem angemessenen Zeitraum abwitterungsfähig sein. Ein weiteres Ziel bestand in der Entwicklung einer wäßrigen Emulsion, die. auf Pflanzen aufgebracht, einen verdunstungshemmenden Wachsfilm bildet, der die Pflanzen in Streßsituationen, z. B. bis zur Wiedereinpflanzung, vor dem Austrocknen schützt.

Daher bestand die Aufgabe, eine Formulierhilfe bzw einen Zusatzstoff für Pflanzenschutzformulierungen zu entwickeln, der zum einen eine verbesserte Haftung und eine großere Kontaktfläche zwischen der so bereiteten Pflanzenschutzformulierung und dem Blatt ermöglicht und zum anderen die Wirkstoffe allmählich freigesetzt werden so daß die Wirkungsdauer der Wirkstoffe erhöht wird und eine Aufwandreduzerung moglich ist.

Diese Aufgabe wurde gelöst durch die Entwicklung einer Formulierhilfe bzw. eines Zusatzstoffes für Pflanzenschutzformulierungen in Form von Wachs/Pflanzenöl-Emulsionen vom Typ Öl-in-Wasser-Emulsion, bestehend aus 20 bis 40 % Emulsionsgrundkörper und 80 bis 60 % deionisiertem Wasser, wobei sich der Emulsionsgrundkörper wie folgt zusammensetzt:
a) 45 bis 70 % eines Wachsesters mit C-Atomen im Bereich von C 30 bis C 300,
b) 10 bis 20 % eines Pflanzenols
c) 04 bis 08 % Mono- und/oder Diacylglyceride,
d) 06 bis 12 % ungesättigte überwiegend geradkettige Fettsäuren mit 16 bis 32 C-Atomen.
e) 10 bis 15 % alkalisches Agenz zum Teil als Verbindungen mit oben genannten Komponenten a und d.

Als Wachsester werden dabei vorzugsweise oxidierte Kohlenwasserstoffe mit einer Säurezahl von 15 bis 35 mg KOH/g und einer Esterzahl von 15 bis 40 mg KOH/g oder
Wachsester, erhalten durch Veresterung von gesättigten Fettsäuren und Fettalkoholen, die aus nativen Olen gewonnen wurden, mit Esterzahlen von 80 bis 120 mg KOH/g, eingesetzt.

Als Pflanzenöl wird vorzugsweise Rapsöl verwendet.

Als alkalische Agentien werden zweckmäßig Amine und/oder wäßrige 10 bis 50% ge Alkalilaugen verwendet

Die Emulsion wird dabei erfindungsgemäß in 2 Verfahrensschritten dadurch hergestellt. daß in einem
1. Verfahrensschritt der Wachsester aufgeschmolzen und bei einer Temperatur von 120 °C bis 200 °C mit dem, auf die gleiche Temperatur vorgeheizten, Pflanzenöl versetzt und homogenisiert wird, in die homogene Schmelze das basische Agenz unter Rühren zudosiert wird und im
2. Verfahrensschritt dieser Emulsionsgrundkörper mit Wasser nach an sich bekannten Emulgierverfahren in eine Öl-in-Wasser-Emulsion gebracht wird.

Die Temperaturen im 1. Verfahrensschritt betragen vorzugsweise 120 bis 160 °C und die Verweilzeiten nach Zugabe der alkalischen Agentien etwa 10 bis 60 min.

Überraschend wurde festgestellt, daß es im 1. Verfahrensschritt im Gemisch von Wachsester und Pflanzenöl bei Zugabe des alkalischen Agenz unter den beschriebenen Bedingungen zu einer partiellen Spaltung des Pflanzenöls kommt und dabei parallel eine partielle Amidisierung bzw. Verseifung der gebildeten ungesättigten Fettsäuren aus dem Pflanzenöl und der Säuregruppen der Wachsester abläuft. Das alkalische Agenz wirkt als Anverseifungsmittel. Dadurch werden zusätzlich emulgierend wirkende Substanzen gebildet, wie Mono- und/oder Diacylglyceride und Fettsäurederivate, wodurch ein weiterer Zusatz von Emulgatoren entfallen kann. Dies führt zur erfindungsgemäßen Zusammensetzung der Emulsion.

Die Emulgierung dieser so modifizierten Wachs/Pflanzenölschmelze wird beispielsweise in einer Rotor-Stator-Emulgiermaschine bei 110 bis 130 °C und Drücken von 2 bis 6 bar (u) durchgeführt.

Die erfindungsgemaßen Wachs/Pflanzenol-Emulsionen werden als Additiv fur Pflanzenschutzmittel zur Verbesserung der Haftung und Benetzung der zu behandelnden Pflanzen sowie der Erhöhung der Regenbeständigkeit eingesetzt. Die Wachs/Pflanzenol-Emulsionen werden dabei den bekannten Pflanzenschutzmitteln vorzugsweise Fungiziden Herbiziden und Wachstumsregulatoren in Konzentrationen von 1 bis 10 Gew % der Spritzbrühe unter Ruhren zudosiert.

Die aus den Wachs/Pflanzenöl-Emulsionen gebildeten Filme lassen sich hinsichtlich Filmstärke, Haftfestigkeit und Durchlässigkeit definiert einstellen. Durch den besonderen Strukturaufbau der Wachs-Pflanzenöl-Filme werden zum einen die Wirkstoffe eingebettet, zum anderen wird die Wachsschicht am Blatt angequollen, so daß ein schnelles Eindringen der Wirkstoffe in das Blatt möglich ist, wobei jedoch die Schutzfunktion nach außen bestehen bleibt. Die gewünschten Folgen sind höherer Wirkungsgrad und somit Einsparung von Pflanzenschutzmitteln und höhere Sicherheit auch bei feuchter Witterung.

Die Wachs/Pflanzenöl-Emulsionen eignen sich weiterhin pur oder in Kombination mit anderen Behandlungsmitteln als Anwachshilfe, vorzugsweise für Setzlinge und Sämlinge, wie z. B. Kiefernsetzlinge, sowie als Pflanzenstärkungsmittel, vorzugsweise für Mais und Zuckerrüben in Streßsituationen. Die Pflanzen werden dabei entweder in die auf 5 bis 10%ig mit Wasser verdünnte Emulsion getaucht oder besprüht. Die Applikationstemperaturen sollten dabei vorzugsweise im Bereich von 10 bis 40°C liegen.

Die Erfindung wird an folgenden Ausführungsbeispielen näher beschrieben, ohne darauf beschränkt zu sein:

### Beispiel 1 bis 3; Herstellung der Wachs/Pflanzenöl-Emulsion

### Beispiel 1

In einem heiz- und kühlbaren 50 l-Rührreaktor wird zunächst 30 kg eines Compounds, bestehend aus 55 % eines Polyethylenwachses mit einer Säurezahl von 26 mg KOH/g und einer Esterzahl von 38 mg KOH/g und einer mittleren Molmasse von 3 100 und 30 % Rapsöl (Sorte 00) bei 140 °C bis 150 °C hergestellt. Anschließend werden 15 % Triethanolamin, bezogen auf das Wachs/Pflanzenölgemisch, dazugegeben und über 20 min bei der o.g. Temperatur gerührt.
Der so hergestellte Emulsionsgrundkörper wird bei 120 °C und 3 bis 4 bar (ü) in einer Rotor-Stator-Emulgiermaschine zu einer 30%igen Emulsion verarbeitet.

### Beispiel 2

45 % eines oxidierten Fischer/Tropsch-Wachses mit einer Säurezahl von 34 mg KOH/g und Esterzahlen von 41 mg KOH/g werden mit 35 % Rapsöl bei 120 °C in einem Rührreaktor compoundiert.
Anschließend werden 20 % einer wäßrigen 30%igen NaOH-Lauge dazugegeben und 20 min gerührt, wobei die Anverseifungs- und Spaltreaktionen zu emulgierenden Substanzen abläuft. Die Emulgierung erfolgt analog Beispiel 1.

### Beispiel 3

50 % eines Wachsesters mit Esterzahlen von 80 bis 120 mg KOH/g erhalten durch saurekatalysierte Veresterung eines Stearylalkohols mit einer Stearylsaure werden mit 35 % Rapsöl bei 140 °C in einem Ruhrreaktor compoundiert
Anschließend werden 20 % Triethanolamin bezogen auf das Wachs/Pflanzenolgemisch, dazugegeben und über 45 min bei der o.g. Temperatur gerührt.
Der so hergestellte Emulsionsgrundkörper wird bei 110 °C bis 120 °C und ca. 3 bar (ü) in einer Rotor-Stator- Emulgiermaschine zu einer 30%igen Emulsion verarbeitet.

Die Emulsionen wurden auf Festkörpergehalt, pH-Wert, Teiichengröße und -verteilung und Oberflächenspannung untersucht. Die Teilchengrößenbestimmung erfolgte mit einem Lichtstreumeßgerät (Laserbeugung).

| Tab. physikalisch-chemische Kenndaten der Emulsion | | | | |
|---|---|---|---|---|
| | | Beispiel 1 | Beispiel 2 | Beispiel 3 |
| Festkörpergehalt | % | 31,8 | 34,0 | 40 |
| pH-Wert | | 8,2 | 7,9 | 8,3 |
| Teilchengröße (x_{ν} (50) | um | 5... 15 | 6 ... 20 | 6 ... 20 |
| Oberflächenspannung | dyn/cm | 29,9 | 28,1 | 28.1 |
| Gehalt an ungespaltenem Rapsöl | % | 14 | 11 | 17 |
| Summe Mono- und Diglyzeride | % | 8 | 6 | 4 |
| ungesättigte Fettsäuren | % | 9 | 6 | 6 |

Die partielle Spaltung des Rapsöls und der Gehalt an Mono-, Di- und Triglyzeriden nach der partiellen Verseifung wurde mittels Umkehrphasen-HPLC (isokratisch, mit Gradientenelution, UV- und RI-Detektion) ermittelt.

Die Oberflächenspannung einer Wachs- oder Paraffinemulsion. wie z. B. in der GB 1 226 790 beschrieben, beträgt im Gegensatz dazu zwischen 40 und 50 dyn/cm.

### Beispiele 4 bis 7:

### Anwendungsbeispiele der erfindungsgemäßen Emulsion

### Beispiel 4 - PSM 1

Testung von Kombinationen aus Fungiziden und der erfindungsgemäßen Wachs/ Pflanzenölemultion gemäß Herstellungsbeispiel 1 zur Bekämpfung der Kraut- und Knollenfäule (Phytophthora) bei Kartoffeln

| | | | |
|---|---|---|---|
| getestetes Fungizid: | Fluazinam | | |
| Anwendungszeit: | gemäß den Empfehlungen des Fungizid-Herstellers bzw bekannten Regeln | | |
| Aufwandmenge: | Die Fungizidmenge wird gemäß den Empfehlungen des Fungizid-Herstellers eingesetzt. Dazu werden 5 Liter/ha Emulsion dosiert. | | |
| Herstellung der Spritzbrühe | Nach dem die Fungizid-Spritzbrühe gemäß den Empfehlungen des Fungizid-Herstellers angesetzt ist wird die entsprechende Menge Emulsion bei laufendem Rührwerk dazugegeben. | | |

| Prüfergebnisse | | | |
|---|---|---|---|
| | PSM normale Aufwandmenge | PSM + erfind.Emulsion | PSM + erfind.Emulsion |
| Aufwandmenge | 1.8 kg/ha | 1.8 kg/ha + 5 l/ha | 1.8 kg.ha + 5 l/ha |
| Befall Braunfäule unmittelbar nach der Ernte | 21 % | 16 % | 7 % |
| Befall Braunfäule 8 Wochen nach der Ernte | 13 % | 3 % | 3 % |

### Effekt. Im Test konnte der Phytophthora-Befall durch den Zusatz der erfindungsgemäßen Wachs-Pflanzenol-Emulsion von 13 % auf 3 % (Bonitur 8 Wochen nach Ernte) gesenkt werden

### Beispiel 5 - PSM 2

Kombination der erfindungsgemäßen Wachs/Pflanzenöl-Emulsion aus Herstellbeispiel 1 und Fungizid zur Bekämpfung von erysiphe graminis (Echter Mehltau) an Winterweizen

| | |
|---|---|
| getestete Fungizide | Schwefelpräparate |
| | |
| Anwendungszeit | gemäß den Empfehlungen des Fungizid-Herstellers bzw. bekannten Regeln. |
| | |
| Aufwandmenge | Fungizidmenge gemäß den Empfehlungen des Fungizid-Herstellers. Dazu werden 5 und 10 Liter/ha der Emulsion dosiert. |
| | |
| Herstellung der Spritzbrühe | Nachdem die Fungizid-Spritzbrühe gemäß den Empfehlungen des Fungizid-Herstellers bereitet ist. wird die entsprechende Menge Wachs/Pflanzenöl-Emulsion bei laufendem Rührwerk dazugegeben. Die Spritzbrühe wird anschließend wie üblich ausgebracht. |

Geprüft wurden die fungizide Wirkung gegen Echten Mehltau und der Einfluß der Kombination auf den Ertrag.

Die Versuche zeigten bei Zusatz der Emulsion gegenüber der üblichen Spritzbrühe eine Verbesserung der Fungizidwirkung. Dadurch ist eine Reduzierung der Aufwandmenge bei gleicher Wirksamkeit möglich Ertragssteigerungen von 2 bis 10 % bei den Kombinationen gegenüber der normalen Spritzbruhe ohne Zusatz der Emulsion sind zu erkennen.

### Beispiel 6 - PSM 3

### Testung von Kombinationen aus Herbiziden und Wachs/Pflanzenöl-Emulsion (Herstellbeispiel 3) zur Bekämpfung ausgewählter Schadpflanzen im Mais

| Besonderheiten: 1 Stunde nach Ausbringen der Spritzbrühe regnete es | | | |
|---|---|---|---|
| | PSM | 50 % PSM | 50 % + erfindungsgemäße Emulsion |
| Menge l/ha | 2.0 | 1,0 | 1,0 + 5 |
| Kamille | ++ | ++ | ++ |
| Windenknöterich | ++ | + | ++ |
| Vogelmiere | + | + | +++ |
| Ackerstiefmütterchen | + | + | ++ |
| Hühnerhirse | - | - | ++ |
| Drahthaarstielhirse | - | - | ++ |
| Phytotoxizität | 0 | 0 | 0 |
| + ausreichende Wirkung | | | |
| ++ gute Wirkung | | | |
| +++ sehr gute Wirkung | | | |

### Effekt: Verringerung der Aufwandmenge Herbizid in Kombinationen mit Emulsion bis auf 50 % möglich bei gleicher Wirksamkeit.

Die Verbesserung der Herbizidwirkung war auch nach einem Regenschauer der ca. 1 Stunde nach der Applikation niederging. noch nachweisbar

### Beispiel 7

### Anwendung der Emulsion als Anwachshilfe bzw. als Pflanzenstärkungsmittel

Die gemäß Beispiel 1 hergestellte Emulsion wird mit Wasser auf ca. 10 % verdünnt. Dabei wird zunächst die entsprechende Menge Wasser vorgelegt und anschließend die Emulsion unter leichtem Rühren eingebracht. Dabei ist kein Vorwärmen des Wassers bzw. der Emulsion erforderlich.

In diese Emulsion werden 50 Kiefernsetzlinge getaucht.

Die Emulsion bildet einen verdunstungshemmenden Wachs/Pflanzenöl-Film aus, der die Setzlinge bis zur Wiedereinpflanzung vor dem Austrocknen schützt und das Anwachsen unterstützt.

Anwachsversuche mit 100 Setzlingen (50 behandelt, 50 unbehandelt) im freien Feld erbrachten nach 20 Wochen eine Steigerung der Anwachsrate um 47 %.

## Patentansprüche

1. Wachs/Pflanzenöl-Emulsionen vom Typ Öl-in-Wasser-Emulsion, bestehend aus 20 bis 40 % Emulsionsgrundkörper der 10 bis 20 % eines Pflanzenöls und 10 bis 15 % alkalisches Agenz enthält, und 80 bis 60 % deionisiertem Wasser,
**dadurch gekennzeichnet, daß** sich der Emulsionsgrundkörper wie folgt zusammensetzt.
a) 45 bis 70 % eines Wachsesters mit C-Atomen im Bereich von C 30 bis 300, wobei als Wachsester
- ein oxidierter Kohlenwasserstoff mit einer Säurezahl von 15 bis 35 mg KOH/g und einer Esterzahl von 15 bis 40 mg KOH/g und/oder
- ein Wachsester mit Esterzahlen von 80 bis 120 mg KOH/g, erhalten durch Veresterung von gesattigten Fettsäuren und Fettalkoholen, die aus nativen Olen gewonnen wurden, eingesetzt wird,
b) C4 bis 08 % Mono- und/oder Diacylglyceride,
c) C6 bis 12 % überwiegend geradkettige Fettsäuren mit 16 bis 32 C-Atomen aus der partiellen Spaltung des Pflanzenols
d) 10 bis 20 % eines Pflanzenöls und
e) 10 bis 15 % alkalisches Agenz. zum Teil als Verbindungen mit oben genannten Komponenten a) und c)

2. Wachs/Pflanzenol-Emulsionen nach Anspruch 1 **dadurch gekennzeichnet daß** als Pflanzenöl Rapsöl verwendet wird

3. Wachs/Pflanzenöl-Emulsionen gemäß Anspruch 1 bis 2, **dadurch gekennzeichnet, daß** als alkalische Agenten Amine und/oder wäßrige 10 bis 50 %ige Alkalilauge verwendet werden.

4. Verfahren zur Herstellung der Wachs/Pflanzenöl-Emulsionen nach einem oder mehreren der Ansprüche 1 bis 3, **dadurch gekennzeichnet, daß** in einem
1. Verfahrensschritt der Wachsester aufgeschmolzen und bei einer Temperatur von 120 °C bis 200 °C mit dem, auf die gleiche Temperatur vorgeheizten, Pflanzenöl versetzt und homogenisiert wird, in die homogene Schmelze das basische Agenz unter Rühren zudosiert wird und im
2. Verfahrensschritt dieser Emulsionsgrundkörper mit Wasser nach an sich bekannten Emulgierverfahren in eine Öl-in-Wasser-Emulsion gebracht wird.

## Claims

1. Wax/vegetable oil emulsions, typically oil-in-water emulsions, consisting at 20 to 40 per cent of an emulsion base, 10 to 20 per cent of which is a vegetable oil and another 10 to 15 per cent an alkaline agent, and at 60 to 80 per cent of deionized water, **characterized in that** the emulsion base is composed as follows:
(a) at 45 to 70 per cent a wax ester with its number of C atoms ranging from 30 to 300, and the wax ester itself being either
- an oxidized hydrocarbon with an acid number equivalent to 15 - 35 mg KOH/g and an ester number equivalent to 15 - 40 mg KOH/g; and/or
- a wax ester with ester numbers equivalent to 80 - 120 mg KOH/g, as a result of the esterification of saturated fatty acids and fatty alcohols extracted from native oils;
(b) at 4 to 8 per cent mono and/or diglycerides;
(c) at 6 to 12 per cent fatty acids, mostly of a straight-chain structure having 16 - 32 C atoms, as a result of a partial decomposition of the vegetable oil
(d) at 10 to 20 per cent a vegetable oil; and
(e) at 10 to 15 per cent a alkaline agent, partly in form of an compound with the constituent parts defined above under a) and c).

2. Wax/vegetable oil emulsions according to claim 1, **characterized in that** rape-seed oil is used as vegetable oil.

3. Wax/vegetable oil emulsions according to claim 1 to 2, **characterized in that** amines and/or a 10 - 50 per cent aqueous alkaline lye are used as alkaline agents.

4. Method for the manufacture of wax/vegetable oil emulsions according to any of the claims 1 to 3, **characterized in that**
in a 1^{st} process step the wax ester is melted and, after reaching a temperature of 120° to 200° C, a vegetable oil pre-heated to the same temperature is added and the mixture homogenized, whereupon the alkaline agent is stirred into the homogeneous melt by way of metered addition; and
in a 2^{nd} process step water is added to convert this emulsion base into an oil-in-water emulsion, according to the usual emulsifying methods commonly known.

## Revendications

1. Emulsions de cire et d'huile végétale de type émulsion aqueuse constituées de 20 à 40 % de substance de base d'émulsion, contenant 10 à 20 % d'une huile végétale et 10 à 15 % d'un agent alcalin, et de 80 à 60 % d'eau désionisée, **caractérisées par le fait que** la substance de base d'émulsion est constituée comme suit:
a) de 45 jusqu'à 70 % d'une ester de cire aux atomes de C dans la gamme de C 30 à 300, l'ester de cire utilisé étant
- un hydrocarbure oxydé avec un indice d'acide de 15 à 35 mg de KOH/g et un indice d'ester de 15 à 40 mg de KOH/g et/ ou
- un ester de cire aux indices d'ester de 80 à 120 mg KOH/g, obtenu par estérification d'acides gras saturés et d'alcools gras qui ont été extraits d'huiles natives,
b) de 04 jusqu'à 08 % de monoglycéride et ou/ de diglycéride d'acyle
c) de 06 jusqu'à 12 % d'acides gras en chaîne linéaire pour l'essentiel avec 16 jusqu'à 32 atomes de C venant de la scission partielle de l'huile végétale
d) de 10 jusqu'à 20 % d'une huile végétale et
e) de 10 jusqu'à 15 % d'agent alcalin en partie comme composés avec les constituants a) et c) ci-dessus.

2. Emulsions de cire et d'huile végétale selon la revendication 1, **caractérisées par le fait qu'**est utilisée de l'huile de colza.

3. Emulsions de cire et d'huile végétale selon les revendications 1 jusqu'à 2. **caractérisées par le fait que** sont utilisés comme agents alcalin des amines et/ ou une lessive alcaline aqueuse de 10 à 50 %.

4. Procédé de fabrication des émulsions de cire et d'huile végétale selon une ou plusieurs des revendications de 1 jusqu'à 3, **caractérisé par le fait que** dans un
1^{er} pas du procédé l'ester de cire est fondu et par une température de 120 jusqu'à 200 °C et mélangé et homogénéisé avec une huile végétale réchauffée à la même température, dans cette fonte homogène est ajouté l'agent basique en mélangeant et que dans le
2^{e} pas cette substance de base d'émulsion est additionnée d'eau pour devenir une émulsion aqueuse d'après le procédé d'émulsion bien connu en soi.
